# EUROPEAN PATENT APPLICATION

(11) **EP 4 046 738 A1**
(43) Date of publication of application: **24.08.2022**
(21) Application number: 22156422.2
(22) Date of filing: 11.02.2022
(51) Int. Cl.: B23K 9/133, B65H 49/32

(54) **MULTIPLE POSITION WIRE FEED SPOOL DELIVERY SYSTEM**

(30) Priority: 17.02.2021 US 202163150323 P; 24.01.2022 US 202217582894
(71) Applicant: Illinois Tool Works, Inc., Glenview, Illinois 60025 (US)
(72) Inventor: CHRISTOPHER, Mark, Glenview, 60025 (US)
(74) Representative: HGF

(57) **Abstract**

Disclosed are systems and methods for feeding welding wire for welding-type applications. The wire-feeder system comprises a spool hub configured to support a wire spool and a multiple-angle hub stand. The multiple-angle hub stand is configured to support the spool hub and the wire spool relative to a mounting surface. The multiple-angle hub stand comprises a lock configured to secure the spool hub relative to the mounting surface at one of a plurality of selectable angles.

## Description

### CROSS REFERENCE TO RELATED APPLICATIONS

The present application claims the benefit of, and priority to, U.S. Provisional Patent Application No. 63/150,323, entitled "Multiple Position Wire Feed Spool Delivery System," filed February 17, 2021, the entire contents of which are hereby incorporated by reference.

### BACKGROUND

In some welding-type applications, a welding wire feeder may be used to feed welding wire from a wire spool to a welding torch for a welding operation. Traditionally, the hub stand, which supports the wire spool, is mounted such that the wire spool resides and rotates in a fixed spool plane. In practice, however, the spool plane that is easiest for loading the wire spool, which can weigh about 80 pounds, may not be the same spool plane that is ideal for wire delivery to a wire feeder. Using traditional systems, it is difficult to load a relatively heavy spool of wire onto a hub stand that is fixed in a position that offers consistent wire feeding. Further, some wire feeders can be adjusted, thus affecting the approach angle of the welding wire spool to the wire feeder from the wire spool. For example, some gas metal arc welding (GMAW) feeders can be positioned at different heights.

Therefore, a need exists for a wire-feeder system with a multiple-angle hub stand that is configured to support a spool hub relative to the mounting surface in a spool plane that can be positioned at one of a plurality of selectable angles, thereby enabling, for example, the operator to load the spool at an angle that is easiest for loading a given spool, and then adjust the multiple-angle hub stand to an angle that is best for wire feeding in a given welding application.

### SUMMARY

The present disclosure relates generally to welding systems and, more particularly, to welding wire feeders and welding wire-feeder systems, substantially as illustrated by and described in connection with at least one of the figures, as set forth more completely in the claims.

### DRAWINGS

The foregoing and other objects, features, and advantages of the devices, systems, and methods described herein will be apparent from the following description of particular embodiments thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1 illustrates an example welding system, in accordance with aspects of this disclosure.
Figure 2a illustrates a perspective view of an example wire feeder system in accordance with a first aspect of this disclosure.
Figure 2b illustrates a side view of the example wire feeder system of Figure 2a.
Figure 2c illustrates a side view of the multiple-angle hub stand of the example wire feeder system of Figure 2a with the wire spool omitted.
Figure 2d illustrates a perspective view of the multiple-angle hub stand of the example wire feeder system of Figure 2a with the wire spool installed.
Figures 3a through 3c illustrate, respectively, the multiple-angle hub stand of Figure 2a in a first, a second, and a third selectable angle.
Figures 4a through 4c illustrate, respectively, a multiple-angle hub stand in accordance with a second aspect of this disclosure positioned in a first, a second, and a third selectable angle.
Figure 5 illustrates a multiple-angle hub stand in accordance with a third aspect of this disclosure.
Figure 6 illustrates a multiple-angle hub stand in accordance with a fourth aspect of this disclosure.
Figure 7 illustrates an example method for configuring a wire-feeder system in a welding-type system.

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the described embodiments. The use of any and all examples, or exemplary language ("e.g.," "such as," or the like) provided herein, is intended merely to better illuminate the embodiments and does not pose a limitation on the scope of the embodiments. The terms "e.g.," and "for example" set off lists of one or more non-limiting examples, instances, or illustrations. No language in the specification should be construed as indicating any unclaimed element as essential to the practice of the embodiments.

The term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

The terms "circuit" and "circuitry" includes any analog and/or digital components, power and/or control elements, such as a microprocessor, digital signal processor (DSP), software, and the like, discrete and/or integrated components, or portions and/or combinations thereof.

The terms "control circuit" and "control circuitry," as used herein, may include digital and/or analog circuitry, discrete and/or integrated circuitry, microprocessors, DSPs, and/or other logic circuitry, and/or associated software, hardware, and/or firmware. Control circuits or control circuitry may be located on one or more circuit boards, which form part or all of a controller, and are used to control a welding process, a device such as a power source or wire feeder, motion, automation, monitoring, air filtration, displays, and/or any other type of welding-related system.

The term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), flash memory, solid state storage, a computer-readable medium, or the like.

The term "torch," "welding torch," "welding tool," or "welding-type tool" refers to a device configured to be manipulated to perform a welding-related task, and can include a hand-held welding torch, robotic welding torch, gun, or other device used to create the welding arc.

The term "welding mode," "welding process," "welding-type process," or "welding operation" refers to the type of process or output used, such as current-controlled (CC), voltage-controlled (CV), pulsed, gas metal arc welding (GMAW), flux-cored arc welding (FCAW), gas tungsten arc welding (GTAW), shielded metal arc welding (SMAW), spray, short circuit, and/or any other type of welding process.

The term "welding-type system," as used herein, includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

The term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

The present methods and systems may be realized in hardware, software, and/or a combination of hardware and software. Example implementations include an application specific integrated circuit and/or a programmable control circuit. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

In some welding-type operations, such as gas metal arc welding (GMAW), welding wire may be fed by a wire feeder to a torch for a welding operation. Welding large weldments, such as those used for buildings, structural members, rail, mining, off-shore, and the like, often employ heavy weld spools with weld wire having a larger diameter. For example, larger weldments sometime run spools of wire that have a diameter of 1/8 or 3/32 inches. The size of the wire spool can also vary in diameter. Example spool diameters include, without limitation, 8 inches, 12 inches, and 16 inches. Depending on the spooled wire length, these spools can weigh about 25 to 100 pounds, typically about 50 to 80 pounds.

Existing wire feeders typically employ a wire spool assembly that secures the wire spool such that it resides and/or rotates in a fixed spool plane and directs the wire to the driver roller via various wire guides. In practice, however, the spool plane that is easiest for loading the wire spool to a spool hub may not be the same spool plane that is ideal for wire delivery to a wire feeder. Therefore, a need exists for a wire-feeder system with a multiple-angle hub stand configured to support a spool hub relative to the mounting surface in a spool plane that can be positioned at one of a plurality of selectable angles. Such a multiple-angle hub stand enables the operator to load the spool at an angle that is easiest for loading a given spool, and then adjust the multiple-angle hub stand to an angle that is best for wire feeding in a given welding application. The multiple-angle hub stand offers a number of advantages. For example, the multiple-angle hub stand allows the operator the flexibility to orient the wire spool in a spool plane that the operator feels will provide the straightest path into the drive roll assembly and/or be easiest to load the wire spool.

In some examples, the wire-feeder system comprises a spool hub configured to support a wire spool and a multiple-angle hub stand. The multiple-angle hub stand is configured to support the spool hub and the wire spool relative to a mounting surface. The wire spool is configured to rotate about an axis of rotation. In some examples, the multiple-angle hub stand comprises a lock configured to secure the spool hub relative to the mounting surface at one of a plurality of selectable angles. The plurality of selectable angles can include the axis of rotation and the mounting surface forming a 90-degree angle, a 135-degree angle, a 180-degree angle, etc. In some examples, the multiple-angle hub stand comprises an adjustable portion pivotally coupled, via a hinge, to the mounting surface of a base platform or a fixed portion of the multiple-angle hub. In some examples, the lock comprises a ratchet mechanism to secure an adjustable portion of the multiple-angle hub stand at one of the plurality of selectable angles. In other examples, the lock comprises a lock pin (e.g., a spring pin), a first opening formed in the adjustable portion, and a second opening formed in the fixed portion, wherein the lock pin is configured to pass through the first opening and the second opening. For example, the first opening may be one of a plurality of openings formed in the adjustable portion and arranged radially about the hinge, while the second opening is one of a plurality of openings formed in the fixed portion and arranged radially about the hinge. In yet another example, the lock comprises a detent positioned on the adjustable portion and a plurality of openings positioned on the fixed portion about the hinge (or vice versa). The detent is configured to engage, for example, one of the plurality of openings. In yet another example, the lock comprises a threaded fastener or a brace arm. The wire-feeder system may include a wire guide assembly configured to guide wire from the wire spool supported on the spool hub to a drive roll assembly. The wire guide assembly can be coupled to the mounting surface, for example. The wire-feeder system may further comprise a handle coupled to an adjustable portion of the multiple-angle hub stand. In some examples, the handle may be configured to release the lock.

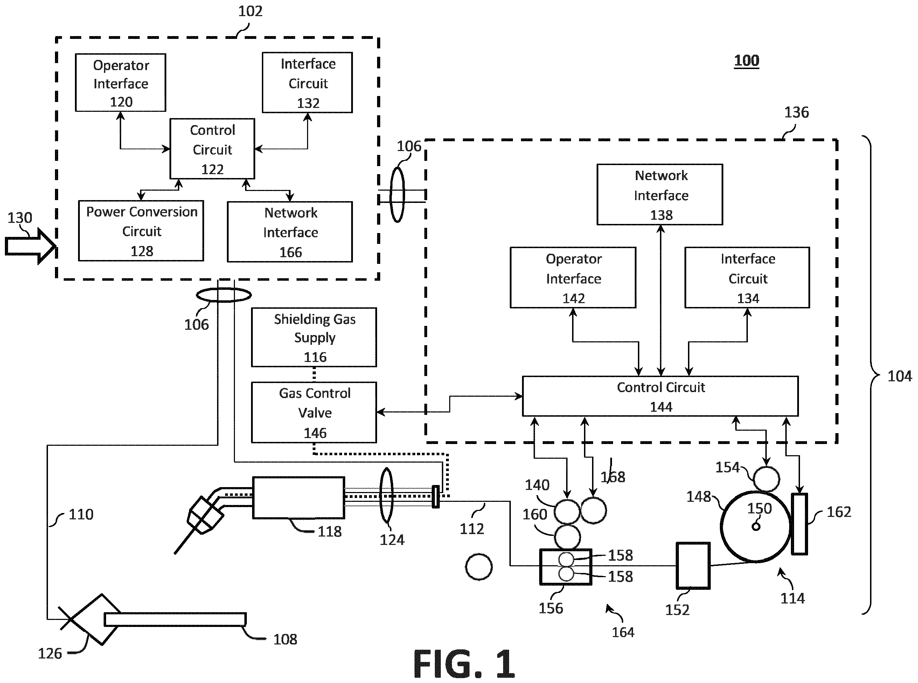

Figure 1 illustrates an example welding-type system 100 for performing welding-type operations. As shown in the welding-type system 100 of Figure 1, a power supply 102 and a wire-feeder system 104 are coupled via conductors or conduits 106. In the illustrated example, the power supply 102 is separate from the wire-feeder system 104, such that the wire-feeder system 104 may be positioned near a welding location at a distance from the power supply 102. Terminals are typically provided on the power supply 102 and on the wire-feeder system 104 to allow the conductors or conduits 106 to be coupled to the systems so as to allow for power and gas to be provided to the wire-feeder system 104 from the power supply 102, and to allow data to be exchanged between the two devices.

The welding-type system 100 is configured to provide welding wire 112 from a welding wire source 114, power from the power supply 102, and shielding gas from a shielding gas supply 116, to a welding torch 118. The welding torch 118 may be any type of arc welding torch, (e.g., GMAW, GTAW, FCAW) and may allow for the feed of a welding wire 112 (e.g., an electrode wire) and gas to a location adjacent to a welding work piece 108. A work cable 110 is run to the welding work piece 108 so as to complete an electrical circuit between the power supply 102 and the welding work piece 108 via a clamp 126.

The welding-type system 100 is configured for weld settings (e.g., weld parameters, such as voltage, wire feed speed, current, gas flow, inductance, physical weld parameters, advanced welding programs, pulse parameters, etc.) to be selected by the operator and/or a welding sequence, such as via an operator interface 120 provided on the power supply 102. The operator interface 120 will typically be incorporated into a front faceplate of the power supply 102, and may allow for selection of settings such as the weld process, the type of wire to be used, voltage and current settings, and so forth. In particular, the example welding-type system 100 is configured to allow for welding with various steels, aluminums, or other welding wire that is channeled through the welding torch 118. Further, the welding-type system 100 is configured to employ welding wires with a variety of wire sizes. For example, between 1/16 and 1/8 inches, though other sizes are contemplated. These weld settings are communicated to a control circuit 122 within the power supply 102. The system may be particularly adapted to implement welding regimes configured for certain electrode types.

The welding torch 118 applies power from the power supply 102 to the welding wire 112, typically by a welding cable 124. Similarly, shielding gas from a shielding gas supply 116 is fed through the wire-feeder system 104 and the welding cable 124. During welding operations, the welding wire 112 is advanced through a jacket of the welding cable 124 towards the welding torch 118 via the wire-feeder system 104.

The work cable 110 and clamp 126 allow for closing an electrical circuit from the power supply 102 through the welding torch 118, the welding wire 112 (electrode), and the welding work piece 108 for maintaining the welding arc during the operation.

The control circuit 122, operates to control generation of welding power output that is supplied to the welding wire 112 for carrying out the desired welding operation. The control circuit 122 is coupled to power conversion circuit 128.

The power conversion circuit 128 is adapted to create the output power, such as pulsed waveforms applied to the welding wire 112 at the welding torch 118. Various power conversion circuits may be employed, including choppers, boost circuitry, buck circuitry, inverters, converters, and/or other switched mode power supply circuitry, and/or any other type of power conversion circuitry. The power conversion circuit 128 is coupled to a source of electrical power as indicated by arrow 130. The power applied to the power conversion circuit 128 may originate in the power grid, although other sources of power may also be used, such as power generated by an engine-driven generator, batteries, fuel cells, or other alternative sources. The power supply 102 illustrated in Figure 1 may also include an interface circuit 132 configured to allow the control circuit 122 to exchange signals with the wire-feeder system 104. The power supply 102 may comprise a network interface 166 configured to communicate data (e.g., measurements, commands, etc.) with another device; whether a remote server, computer, or the wire-feeder system 104 (via its network interface 138).

The wire-feeder system 104 includes a complimentary interface circuit 134 that is coupled to the interface circuit 132. In some examples, multi-pin interfaces may be provided on both components and a multi-conductor cable run between the interface circuit to allow for such information as wire feed speeds, processes, selected currents, voltages or power levels, and so forth to be set on either the power supply 102, the wire-feeder system 104, or both. Additionally or alternatively, the interface circuit 134 and the interface circuit 132 may communicate wirelessly and/or via the weld cable.

The wire-feeder system 104 includes a wire feed controller 136 operatively coupled to the welding wire source 114, the first wire feeder motor 140, etc. The wire feed controller 136 may comprise a network interface 138, an operator interface 142, an interface circuit 134, and a control circuit 144. The wire-feeder system 104 also includes control circuit 144 coupled to the interface circuit 134. As described below, the control circuit 144 allows for wire feed speeds to be controlled in accordance with operator selections and/or stored sequence instructions, and permits these settings to be fed back to the power supply 102 via the interface circuit 134. The control circuit 144 is coupled to an operator interface 142 on the wire feeder that allows selection of one or more welding parameters, particularly wire feed speed. The operator interface may also allow for selection of such weld parameters as the process, the type of wire utilized, current, voltage or power settings, and so forth. The control circuit 144 may also be coupled to gas control valving 146 that regulates and measures the flow of shielding gas from the shielding gas supply 116 to the welding torch 118 via the conductors or conduits 106. In general, such gas is provided at the time of welding, and may be turned on immediately preceding the weld and for a short time following the weld operation. The shielding gas supply 116 may be provided in the form of pressurized bottles.

The wire-feeder system 104 includes components for feeding wire to the welding torch 118 and thereby to the welding operation, under the control of control circuit 144. As illustrated, the wire-feeder system 104 comprises a spool hub 150 configured to support a wire spool 148. The wire spool 148 is mounted on a spool hub 150 and configured to rotate relative to a structure (e.g., the base platform 202 described below) via the spool hub 150 about a spool axis of rotation. The wire spool 148 is physically removable from the spool hub 150 of the wire-feeder system 104 to allow the user to replace the wire spool 148 as needed (e.g., when depleted). In some examples, the spool hub 150 is configured to support a wire spool 148 weighing between 25 and 100 pounds, or between 50 and 80 pounds. To accommodate the weight of the wire spool 148, the spool hub 150 may be fabricated from thicker gauge materials and/or comprise bearings (e.g., ball bearings) to enable the wire spool 148 to rotate more smoothly.

An inlet of the drive roll assembly 164 is connected to an outlet of the welding wire source 114 via one or more connectors and a wire guide assembly 152. In some examples, however, the wire feeder inlet may be directly connected to the outlet of the welding wire source 114.

In operation, welding wire 112 is unspooled from the wire spool 148 and is progressively fed to the welding torch 118 by the drive roll assembly 164. The wire spool 148 may be associated with a clutch 154 that disengages the wire spool 148 when welding wire 112 is to be fed from the wire spool 148 to the welding torch 118. The clutch 154 may also be regulated, for example by the control circuit 144, to maintain a minimum friction level to avoid free spinning of the wire spool 148. The first wire feeder motor 140 of the drive roll assembly 164 may be provided within a housing 156 that engages with wire feed rollers 158 via a driving gear 160 to pull wire from the wire spool 148 and push it toward the welding torch 118. A second wire feeder motor may be provided (e.g., in push-pull arrangement) in the welding torch 118 to pull the welding wire 112 via a second drive roll assembly.

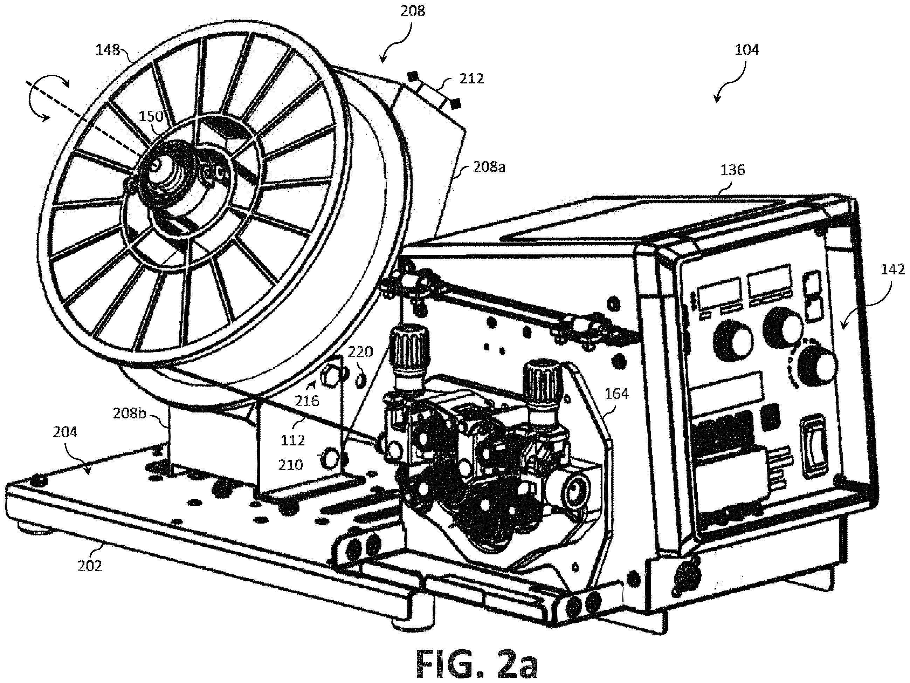

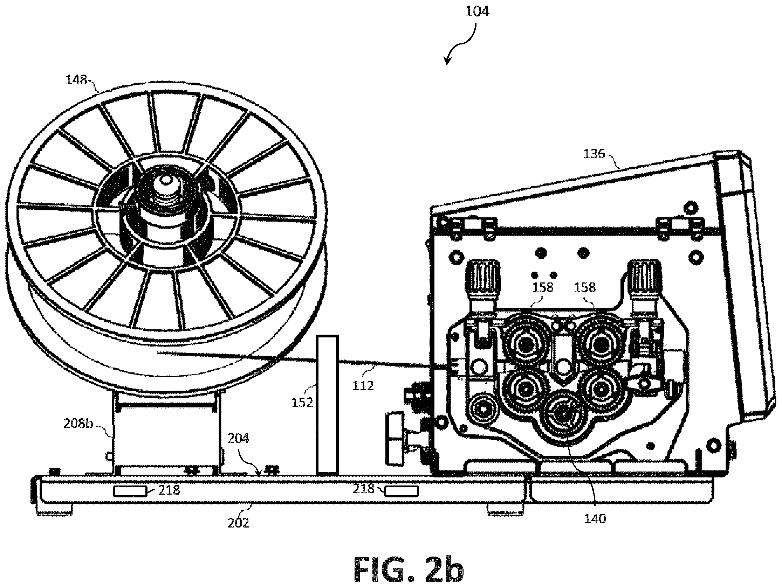

In practice, the driving gear 160 is mechanically coupled to the first wire feeder motor 140 and is rotated by the first wire feeder motor 140 to drive the wire from the wire spool 148. The driving gear 160 is mechanically coupled with one or more sets of wire feed rollers 158. As illustrated, each set of wire feed rollers 158 includes a set of two wire feed rollers 158 biased towards one another (with the welding wire 112 in between) to apply adequate pressure by the two rollers to the welding wire 112. In other aspects, where it is desirable to omit the driving gear 160, at least one of the wire feed rollers 158 is mechanically coupled to the first wire feeder motor 140. Some systems may include multiple rollers of this type, such as the dual drive roll assembly 164 represented in Figures 2a and 2b, which has two sets of wire feed rollers 158. In some examples, the wire-feeder system 104 is configured to feed 1/8 inch wire. In some examples, the wire-feeder system 104 is configured to feed 3/32 inch wire.

A tachometer 168 or other sensor may be provided for detecting the speed of the first wire feeder motor 140, the wire feed rollers 158, or any other associated component so as to provide an indication of the actual wire feed speed. Signals from the tachometer 168 are fed back to the control circuit 144 such that the control circuit 144 can track the length of wire that has been fed. The length of wire may be used directly to calculate consumption of the wire and/or the length may be converted to wire weight based on the type of wire and its diameter.

When a wire spool 148 is installed, an operator may input information about the wire spool 148, for example via the operator interface 142. The control circuit 144 may receive this information and determine an initial amount of wire able to be fed from the wire spool 148, for example by weight or by length of wire. For example, the operator may input a spool serial number, and the control circuit 144 may determine a weight or length of wire by looking up the spool type in memory of the control circuit 144 or in an external database. In some examples, the user may input weight or wire length information and/or wire type information into the operator interface 142. The control circuit 144 can then track consumption of the wire, for example based on signals received from the tachometer 168.

The control circuit 144 may control the operator interface 142 to indicate when an amount of wire remaining in the wire spool 148 is less than a threshold amount. An operator may then be aware that the wire spool 148 should be replaced soon. In some examples, the operator interface 142 may display an amount of wire (e.g., by weight or length) remaining in the wire spool 148. In some examples, the control circuit 144 may send a command to stop or disable a welding operation when an amount of wire remaining in the wire spool 148 is less than a threshold amount.

In some examples, the welding wire source 114 includes a sensor 162 to determine an amount of wire remaining in the wire spool 148. For example, the sensor 162 may be a scale to measure the weight of the wire spool 148. Signals from the scale (sensor 162) are fed back to the control circuit 144 such that the control circuit 144 can track a consumption of welding wire by weight. As described above, the operator interface 142 may display an amount of wire remaining in the wire spool 148 (e.g., by weight or length) and/or indicate when an amount of wire remaining in the wire spool 148 is less than a threshold amount. In some examples, the control circuit 144 may send a command to stop or disable a welding operation when an amount of wire remaining in the wire spool 148 is less than a threshold amount. In some examples, rather than a scale, the sensor 162 may be a light sensor which measures approximately how much wire is left in the spool. In some examples, a light sensor may determine when an amount of wire remaining on the spool is less than a threshold amount. In some examples, multiple light sensors may be used to determine when the amount of wire remaining is at various threshold amounts.

In some examples, the wire-feeder system 104 may include a sensor 162 that detects when a welding wire source 114 is connected to the wire-feeder system 104. For example, the sensor 162 may be a radio frequency identification ("RFID") reader which reach a RFID tag on the wire spool 148. The RFID reader may receive information about the wire spool 148, for example a wire type, wire length, or wire weight. The information is sent to the control circuit 144. The control circuit 144 may track a consumption of the wire spool 148 based on the initial information received from the sensor 162 and/or monitoring use of the wire. The control circuit 144 may adjust one or more settings of the wire-feeder system 104 based on the wire type information. The control circuit 144 may also transmit the received wire type information to the power supply 102 (e.g., via the interface circuit 134). The control circuit 122 of the power supply 102 may then adjust one or more settings of the power supply 102 based on the received wire type. In some examples, the control circuit 144 of the wire-feeder system 104 or the control circuit 122 of the power supply 102 may determine whether a selected welding process or selected weld settings are compatible with the received wire type. In some examples, the operator interface (e.g., operator interfaces 120, 142) may indicate that the received wire type is not compatible with the selected welding process or selected weld settings. Other possible wireless technologies that the sensor 162 may use include Bluetooth, Bluetooth low energy, near field communication, ZigBee, RuBee, or the like.

As illustrated, the wire-feeder system 104 can include a wire guide assembly 152 connected between the welding wire source 114 and the inlet of the drive roll assembly 164. The wire guide assembly 152 guides wire received from the welding wire source 114 to the wire feed rollers 158. The wire guide assembly 152 avoids, or at minimum mitigates, inlet guide wear issues at the drive roll assembly 164 and improves longevity of the drive roll assembly 164 by presenting welding wire 112 without the added side loads and force that are presented by heavy wire on a large wire spool 148.

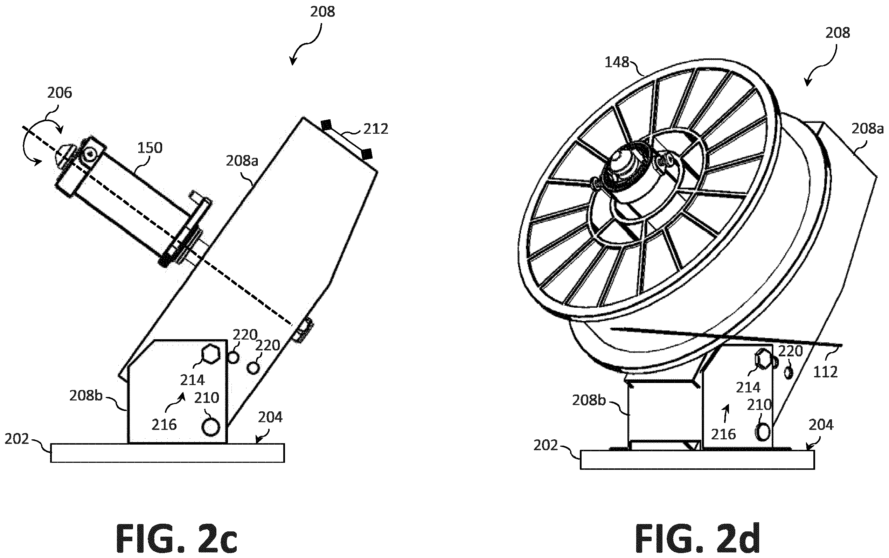

Figures 2a and 2b illustrate, respectively, perspective and side views of an example wire feeder system in accordance with a first aspect of this disclosure. Figures 2c and 2d illustrate, respectively, side and perspective views of the multiple-angle hub stand with the wire spool omitted and installed. As illustrated, the wire feed controller 136, drive roll assembly 164, wire guide assembly 152, and wire spool 148 may be secured to a base platform 202 via a multiple-angle hub stand 208. The base platform 202 may be generally planar to define a mounting surface 204 to which the various components are attached, such as the wire feed controller 136, drive roll assembly 164, multiple-angle hub stand 208 (to support the wire spool 148), and, in some cases, a wire guide assembly 152 (as illustrated in Figure 2b).

Unlike traditional wire-feeder systems, the wire spool 148 is mounted pivotally on the mounting surface 204 via a multiple-angle hub stand 208 in one of a plurality of selectable angles 222. The multiple-angle hub stand 208 is configured to support the spool hub 150 and the wire spool 148 relative to a mounting surface 204. In other words, the wire spool 148 can be mounted to the mounting surface 204 of the base platform 202 and configured to adjust its spool axis of rotation 206 via the multiple-angle hub stand 208, thereby adjusting the spool plane 224 in which the wire spool 148 rotates. In some examples, the multiple-angle hub stand 208 comprises a lock 216 (e.g., a pivot angle lock) configured to secure the spool hub 150 relative to the mounting surface 204 at a selected one of a plurality of selectable angles 222. The spool axis of rotation 206 may be substantially perpendicular to the mounting surface 204, substantially parallel to the mounting surface 204, or oriented at a position (e.g., angle) between perpendicular and horizontal.

Due to the weight and/or size of the wire spool, it is typically easier for the operator to install (i.e., mount) the wire spool 148 when the spool hub 150 is horizontally-oriented (i.e., where the spool axis of rotation 206 is substantially perpendicular to the mounting surface 204 such that the spool plane 224 is parallel to the mounting surface 204). One installed, the operator may then adjust the multiple-angle hub stand 208 to a position that is better-suited for the particular welding system or operation.

A wire spool 148 works in conjunction with the wire guide assembly 152 to improve wire feeding of large wire spools. For example, positioning the wire spool 148 toward the center of mass improves the weight distribution of the wire-feeder system 104 with the wire spool 148 loaded, thus improving the weld operator's ability to move the wire-feeder system 104 around the job site to a welding location, whether via a cart, sled, power source, etc. Weight distribution also improves a crane's ability to lift the wire-feeder system 104, where applicable. Further, a multiple-angle hub stand 208 configured to orient the wire spool 148 horizontally allows for easier storage of the wire-feeder system 104 due to its more compact design and lower center of gravity. A low center of gravity also enables use of a very low and compact transportation sled on slides to allow for improved mobility, safety, and use on multiple surfaces and job sites.

In some examples, the wire spool 148 may be locked rotationally in place on the spool hub 150. For example, a locking mechanism may prevent the wire spool 148 from spinning on the spool hub 150 (e.g., which may occur without a locking mechanism when the welding wire source 114 is moved) except for when an operator manually feeds wire through the guide 152 or when the drive components of the feeder pull the wire through the guide 152.

The drive roll assembly 164 includes one or more sets of drive rollers 158 configured to drive welding wire 112 from the wire spool 148, through the wire guide assembly 152, and to a welding torch 118. As illustrated, each of the drive rollers 158 can be configured to rotate about a roller axis of rotation that is substantially parallel to the mounting surface 204.

The components of the wire feed controller 136, drive roll assembly 164, wire guide assembly 152, and wire spool 148 may be modular to enable the operator to quickly replace components in the event a malfunction occurs. In other aspect, a modular configuration enables an operator to use or repurpose an existing device as the base platform 202. For example, a wooden pallet may be used as the base platform 202, if desired. Further, a modular configuration allows for disassembly or removal of components without disassembling the entire system. For example, the drive assembly or portions thereof can be removed while leaving the motor in place. As a result, a larger motor can be used and replaceable parts can be installed with the motor in situ.

The wire guide assembly 152 is configured to guide wire from the wire spool 148 to the outlet. In some examples, the wire guide assembly 152 is configured to guide wire having a diameter that is between 1/16 and 1/8 inches. In some examples, the wire guide assembly 152 is configured to guide 3/32 or 1/8 inch wire.

The base platform 202 may be fabricated form metal, wood, plastic, composites, or a combination thereof. In certain aspects, the base platform 202 may be a repurposed structure, such as a wooden pallet. The topside (i.e., the mounting surface 204) and underside may each be generally planar (i.e., flat) to enable stacking, loading, and ease of portability. The base platform 202 may comprise a plurality of supports to support a second wire-feeder system 104 above the mounting surface 204 of a first wire-feeder system 104. Each of the plurality of supports may be shaped as a column, post, block, or the like and can be fabricated from metal, wood, plastic, composites, or a combination thereof. The height of the plurality of supports may be dictated by the height of the tallest object mounted to the mounting surface 204, thereby ensuring proper clearance if a second wire-feeder system 104 is stacked on the first wire-feeder system. The plurality of supports may comprise at least three supports to support a base platform 202 of the second wire-feeder system 104, but additional supports may be provided (e.g., one at each corner of the base platform 202).

In certain aspects, the wire-feeder systems 104 may include carrying handles. For example, carrying handles may be positioned at the edges or on the sides of the base platform 202 and spaced around the base platform 202 to enable for two or more people to carry the wire-feeder systems 104. The base platform 202 may further comprises a set of forklift pockets 218 to enable a fork lift to readily transport and/or stack the wire-feeder systems 104. In some example, each side of the base platform 202 may comprises a set of forklift pockets 218 to enable the fork lift to approach and lift the wire-feeder system 104 from any direction.

The multiple-angle hub stand 208 may be fabricated from a metal or a metal alloy. As best illustrated in Figures 2c and 2d, in some examples, the multiple-angle hub stand 208 comprises an adjustable portion 208a pivotally coupled to a fixed portion 208b via a hinge 210. In some examples, the adjustable portion 208a is pivotally coupled to the fixed portion 208b via the hinge 210, which enables the spool hub 150 to be positioned at one of a plurality of selectable angles 222 relative to the mounting surface 204. The fixed portion 208b is configured to couple with the mounting surface 204 (e.g., via bolts, screws, or another type of fastener). The fixed portion 208b serves to attach or link the mounting surface 204 and the adjustable portion 208a, while also elevating the pivot point (e.g., the hinge 210) between the adjustable portion 208a and the fixed portion 208b away from the mounting surface 204.

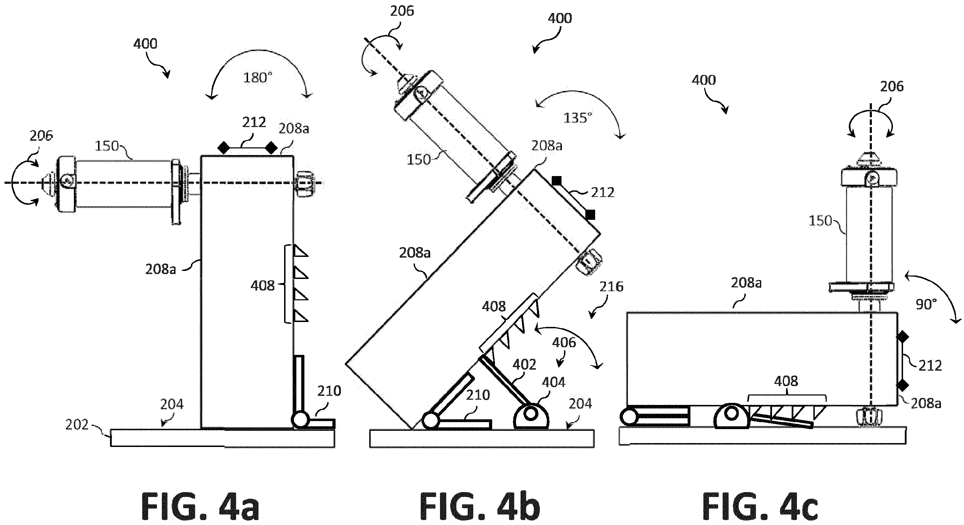

The hinge 210 may comprise, for example, a pivot pin (e.g., a rod) that passes through openings formed in the adjustable portion 208a and the fixed portion 208b such that the pivot pin serves as the pivot point. In another example, the hinge 210 is a barrel hinge having a pair of leaves pivotally coupled to one another via a pin that, for example, passes through knuckles defined by the pair of leaves. In this example, each of the pair of leaves is connected to one of the adjustable portion 208a and the fixed portion 208b. However, one of the pair of leaves may instead be connected to the mounting surface 204 (as illustrated in Figures 4a through 4c).

The lock 216 is configured to secure the spool hub 150 relative to the mounting surface 204 at one of a plurality of selectable angles 222. As will be apparent from the figures, the fixed portion 208b can also provide surfaces upon which portions of the lock 216 may be provided, thereby allowing the multiple-angle hub stand 208 to be a stand-alone component that, if desired, can be more easily transported from one mounting surface 204 to another.

In some examples, the lock 216 comprises a lock pin 214 configured to pass through and/or otherwise engage a first opening 220 and a second opening 220. The lock pin 214 may be, for example, a rod or a spring pin (e.g., a tension pin, a roll pin, etc.). In another example, the lock 216 comprises a detent positioned on either the adjustable portion 208a or the fixed portion 208b and configured to engage one the plurality of openings 220 positioned about the hinge 210 on the other of the adjustable portion 208a or the fixed portion 208b. In lieu of openings 220, in some example, one or more depressions may be formed in one of the adjustable portion 208a or the fixed portion 208b (e.g., punched or stamped into the sheet metal) radially about the hinge 210 and configured to engage the detent. In another example, the lock 216 comprises a threaded fastener, which may be configured to pass through a first hole (e.g., one of the first opening 220 or the second opening 220) and engage threads of a second hole (e.g., the other one of the first opening 220 or the second opening 220).

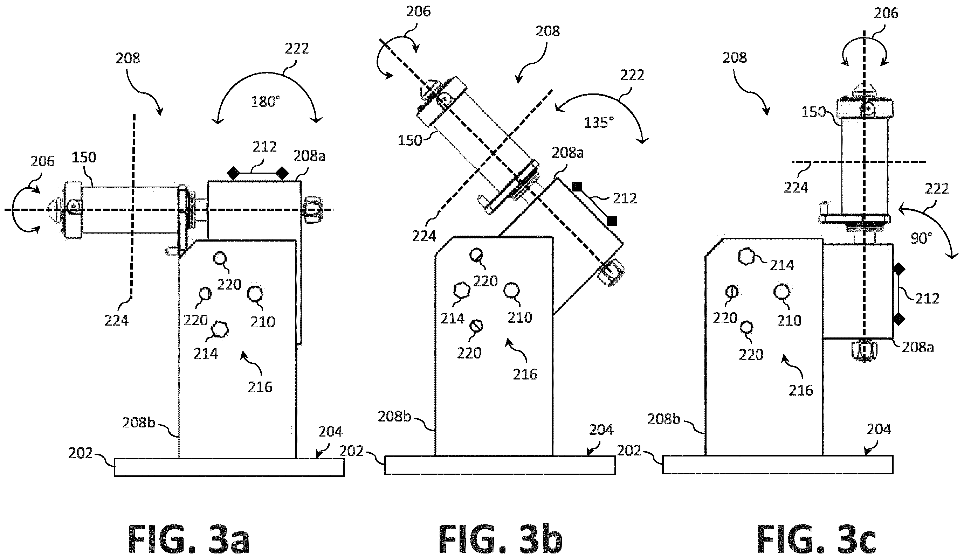

The first opening 220 can be formed in the adjustable portion 208a and the second opening 220 can formed in the fixed portion 208b (or vice versa). In the illustrated example, the first opening 220 is one of a plurality of openings 220 formed in the adjustable portion 208a and arranged radially about the hinge 210. In this example, which will be described in connection with Figures 3a through 3c, each of the plurality of openings 220 is associated with one of a plurality of selectable angles 222.

A handle 212 may be coupled to the adjustable portion 208a of the multiple-angle hub stand 208 to enable the operator to grasp and manipulate the adjustable portion 208a when transitioning it between the plurality of selectable angles 222. The handle 212 may be a pull handle as illustrated. The handle 212 may be a spring loaded pull handle that is configured to collapse (e.g., fold against the surface of the adjustable portion 208a) when not in use to become more compact. In some cases, as will be described below, the handle 212 may be configured to release the lock 216.

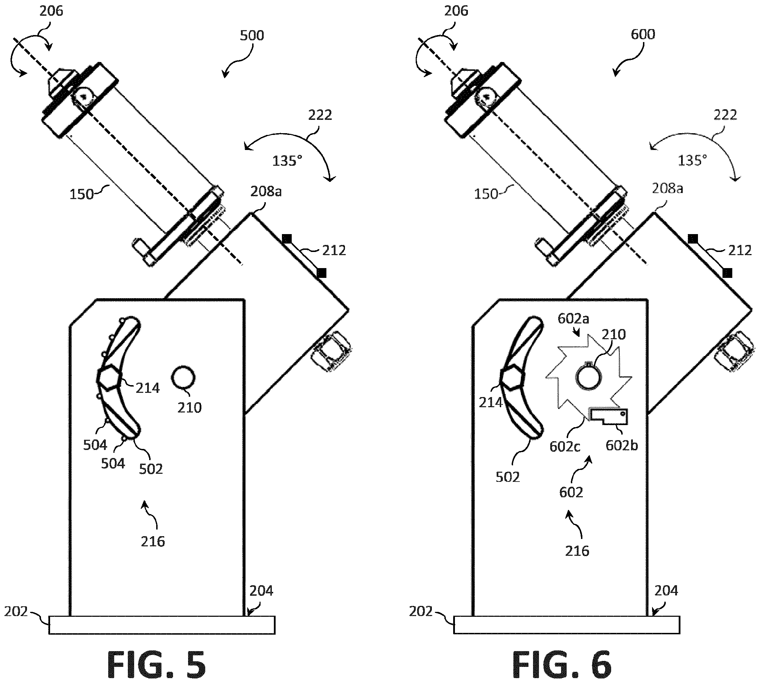

Figures 3a through 3c illustrates the multiple-angle hub stand 208 of Figure 2a positioned at first, second, and third selectable angles 222. In the illustrated example, the multiple-angle hub stand 208 can be adjusted between positions at 45-degree increments. In one example, the axis of rotation 206 and the mounting surface 204 form, for example, a 180-degree angle (e.g., parallel as illustrated in Figure 3a), a 135-degree angle (as illustrated in Figure 3b), and a 90-degree angle (e.g., perpendicular as illustrated in Figure 3c). While the fixed portion 208b is illustrated as defining three openings 220 corresponding to the three selectable angles 222, additional selectable angles 222 are contemplated to provide the operator with a more granular level of adjustment. To that end, more than three openings 220 may be employed or a different type of lock 216 may be used (e.g., the locks 216 of Figure 5 and/or Figure 6). In one example, an opening 220 may be provided at predetermined increments less than 45-degrees (e.g., every 5 degrees, 10 degrees, 15 degrees, etc.). In another example, an opening 220 may be provided at predetermined increments greater than 45-degrees (e.g., every 90 degrees).

Further, while the spool axis of rotation 206 is illustrated as oriented 90 degrees relative to the mounting surface 204 when the wire spool 148 is oriented horizontally, those of skill in the art would appreciate that the spool axis of rotation 206 need not be exactly 90 degrees, rather, the spool axis of rotation 206 can deviate from the 90 degrees by a predetermined angle to cant the wire spool 148 in a particular direction (e.g., toward the center of gravity of the wire-feeder system 104 to increase stability). The predetermined angle may be, for example, 5 to 15 degrees, or about 10 degrees. To that end, in one example, the spool axis of rotation 206 may be mounted at an angle that is between 75 and 105 degrees relative to the mounting surface 204 when the wire spool 148 is configured in horizontal orientation. In another example, the spool axis of rotation 206 may be mounted at an angle that is between 85 and 90 degrees relative to the mounting surface 204 when the wire spool 148 is configured in horizontal orientation.

While the multiple-angle hub stand 208 is illustrated as a multi-piece stand with an adjustable portion 208a and a fixed portion 208b, the fixed portion 208b may be omitted and the hinge 210 may instead be coupled directly to the mounting surface, thereby obviating the need for the fixed portion 208b to provide a one-piece stand.

Figures 4a through 4c illustrates a multiple-angle hub stand 400 with a second aspect of this disclosure configured as a one-piece stand in accordance and positioned at first, second, and third selectable angles 222. In this example, the adjustable portion 208a is coupled to the mounting surface 204 via a hinge 210. In the illustrated example, the wire-feeder system 104 employs a lock 216 that comprises a brace 406. The brace 406 may be coupled to the mounting surface 204 and configured to secure the adjustable portion 208a at a selected one of the plurality of selectable angles 222. In some examples, the brace 406 comprises a brace arm 402 pivotally attached to the mounting surface 204 via a pivot base 404. In operation, the operator may disengage the brace 406 (e.g., by lifting the adjustable portion 208a and pivoting the brace arm 402 via the pivot base 404 away from the adjustable portion 208a), move the adjustable portion 208a about the hinge 210 to a desired position, and then reengage the brace 406 (e.g., by pivoting the brace arm 402 via the pivot base 404 to contact the adjustable portion 208a). In this example, the adjustable portion 208a may define a surface that sized and shaped to engage the brace arm 402 to mitigate slippage. In some examples, the surface may comprise a ratchet structure 408 (E.g., a saw-tooth structure) to engage the brace arm 402. In this example, each tooth of the ratchet structure 408 may correspond one of the plurality of selectable angles 222, each tooth being associated with a predetermined increment.

Figure 5 illustrates a multiple-angle hub stand 500 in accordance with a third aspect of this disclosure. In this example, the lock 216 comprises lock pin 214 that travels within a crescent-shaped slot 502 (e.g., a curved channel). The crescent-shaped slot 502 enables the lock pin 214 to be lock at any desired position along the channel. The lock pin 214 may be locked at a desired position within the crescent-shaped slot 502 via a threaded screw-down knob and/or a detent, which may be incorporated into the lock pin 214. To quickly select and set the lock pin 214 at a given angle/increment (and therefore, secure the adjustable portion 208a at the given angle/increment), the crescent-shaped slot 502 may include, or define, one or more pre-set marks 504. The one or more pre-set marks 504 may be provided as detents or notches along an interior edge of the crescent-shaped slot 502. In operation, the operator may disengage the lock pin 214 (e.g., by loosening the screw-down knob and/or release the detent), move the adjustable portion 208a about the hinge 210, and then reengage the lock pin 214 (e.g., by tightening the screw-down knob and/or capturing the detent).

Figure 6 illustrates a multiple-angle hub stand 600 in accordance with a fourth aspect of this disclosure. In this example, the lock 216 comprises a ratchet mechanism 602. As illustrated, the ratchet mechanism 602 comprises a ratchet wheel 602a and a pawl 602b. The ratchet wheel 602a is coupled to the hinge 210 (e.g., at the pivot pin or axle) and configured to rotate with the adjustable portion 208a. For example, as the adjustable portion 208a rotates about the hinge 210 relative to the fixed portion 208b. The ratchet wheel 602a may be, for example, keyed and slip-fit on to the pivot pin of the hinge 210. In other examples, the ratchet wheel 602a may be, for example, welded to the pivot pin of the hinge 210.

The pawl 602b is configured to engage one of a plurality of ratchet teeth 602c arranged radially about the ratchet wheel 602a. The ratchet mechanism 602, which may be spring loaded to bias the ratchet wheel 602a against the pawl 602b. In operation, the operator may disengage the ratchet mechanism 602 by biasing the spring-loaded pawl 602b away from the ratchet tooth 602c (compressing the spring of the spring-loaded pawl 602b) of the ratchet wheel 602a to thereby allow the ratchet wheel 602a and the adjustable portion 208a to rotate freely with the hinge 210. In some examples, the handle 212 may be configured to disengage the ratchet mechanism 602. For example, the handle 212 may be coupled to a mechanical linkage that passes through the body of the adjustable portion 208a and couples to, for example, the spring-loaded pawl 602b. In operation, the operator may push, pull, and/or twist the handle 212 to urge the pawl 602b away from the ratchet tooth 602c and disengage the ratchet mechanism 602. In certain aspects, the multiple-angle hub stand 600 may comprise, in addition to the ratchet mechanism 602, a lock pin 214 and a crescent-shaped slot 502 to set and/or secure the adjustable portion 208a should the ratchet mechanism 602 become disengaged.

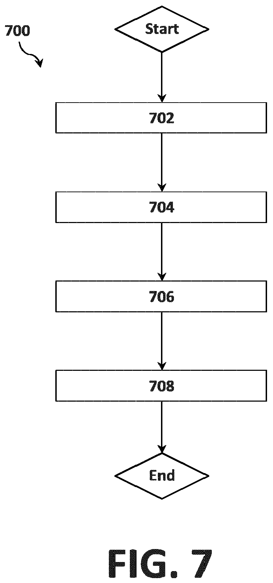

Figure 7 illustrates an example method 700 for configuring a multiple-angle hub stand 208 of a wire-feeder system 104 in a welding-type system 100.

At step 702, a wire spool 148 is mounted to the spool hub 150 of a multiple-angle hub stand 208. The wire spool 148 being configured to rotate about an axis of rotation 206. The spool hub 150 is configured to support the wire spool 148 relative to a mounting surface 204 in one of plurality of selectable angles 222 between the axis of rotation 206 and the mounting surface 204.

At step 704, the spool hub 150 is adjusted from a first selectable angle 222 of the plurality of selectable angles 222 to a second selectable angle 222 of the plurality of selectable angles 222. The plurality of selectable angles 222 includes, for example, a 180-degree angle, a 135-degree angle, and a 90-degree angle between the axis of rotation 206 and the mounting surface 204.

At step 706, welding wire 112 is passed from the wire spool 148 to a wire guide assembly 152, which may be separate from the wire spool 148.

At step 708, the welding wire 112 is driven from the wire guide assembly 152 to a welding torch 118 via a drive roll assembly 164 having one or more sets of drive rollers 158.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following numbered clauses.

Clause 1. A wire-feeder system comprising:
a spool hub configured to support a wire spool; and
a multiple-angle hub stand configured to support the spool hub and the wire spool relative to a mounting surface,
   wherein the multiple-angle hub stand comprises a lock configured to secure the spool hub relative to the mounting surface at one of a plurality of selectable angles.

Clause 2. The wire-feeder system of clause 1, wherein the wire spool is configured to rotate about an axis of rotation, and wherein the plurality of selectable angles includes the axis of rotation and the mounting surface forming a 90-degree angle, a 135-degree angle, and a 180-degree angle.

Clause 3. The wire-feeder system of clause 1, wherein the wire spool is configured to rotate about an axis of rotation, and wherein the lock comprises a ratchet mechanism to secure an adjustable portion at one of the plurality of selectable angles.

Clause 4. The wire-feeder system of clause 1, wherein the multiple-angle hub stand comprises an adjustable portion pivotally coupled to the mounting surface via a hinge.

Clause 5. The wire-feeder system of clause 1, wherein the multiple-angle hub stand comprises an adjustable portion pivotally coupled to a fixed portion via a hinge.

Clause 6. The wire-feeder system of clause 5, wherein the spool hub is coupled to the adjustable portion and the fixed portion is configured to couple with the mounting surface.

Clause 7. The wire-feeder system of clause 5, wherein the lock comprises a lock pin, a first opening formed in the adjustable portion, and a second opening formed in the fixed portion, wherein the lock pin is configured to pass through the first opening and the second opening.

Clause 8. The wire-feeder system of clause 7, wherein the first opening is one of a plurality of openings formed in the adjustable portion and arranged radially about the hinge.

Clause 9. The wire-feeder system of clause 7, wherein the second opening is one of a plurality of openings formed in the fixed portion and arranged radially about the hinge.

Clause 10. The wire-feeder system of clause 7, wherein the lock pin is a spring pin.

Clause 11. The wire-feeder system of clause 3, wherein the lock comprises a detent positioned on the adjustable portion and a plurality of openings positioned on the fixed portion about the hinge, wherein the detent is configured to engage one of the plurality of openings.

Clause 12. The wire-feeder system of clause 1, further comprising a wire guide assembly configured to guide wire from the wire spool supported on the spool hub to a drive roll assembly.

Clause 13. The wire-feeder system of clause 12, wherein the wire guide assembly is coupled to the mounting surface.

Clause 14. The wire-feeder system of clause 1, wherein the lock comprises a hinge and a brace arm.

Clause 15. The wire-feeder system of clause 1, wherein the lock comprises a threaded fastener.

Clause 16. The wire-feeder system of clause 1, further comprising a handle coupled to an adjustable portion of the multiple-angle hub stand.

Clause 17. A wire-feeder system comprising:
a spool hub configured to support a wire spool; and
a multiple-angle hub stand comprising an adjustable portion pivotally coupled to a fixed portion via a hinge,
   wherein the multiple-angle hub stand is configured to support the spool hub and the wire spool relative to a mounting surface of a base platform at one of a plurality of selectable angles; and
a lock configured to secure the adjustable portion relative to the fixed portion at a selected one of the plurality of selectable angles.

Clause 18. The wire-feeder system of clause 17, wherein the lock comprises a lock pin configured to engage each of the adjustable portion and the fixed portion.

Clause 19. The wire-feeder system of clause 17, wherein the lock comprises a threaded fastener configured to engage one of the adjustable portion and the fixed portion.

Clause 20. A method for operating a multiple-angle hub stand of a wire-feeder system in a welding-type system, the method comprising:
mounting a wire spool to a spool hub of the multiple-angle hub stand,
wherein the spool hub is position at a first selectable angle selected from a plurality of selectable angles;
adjusting, via the multiple-angle hub stand, the spool hub from the first selectable angle to a second selectable angle selected from the plurality of selectable angles; and
passing a welding wire from the wire spool to a welding torch via a drive roll assembly.

## Claims

1. A wire-feeder system comprising:
a spool hub configured to support a wire spool; and
a multiple-angle hub stand configured to support the spool hub and the wire spool relative to a mounting surface,
wherein the multiple-angle hub stand comprises a lock configured to secure the spool hub relative to the mounting surface at one of a plurality of selectable angles.

2. The wire-feeder system of claim 1, wherein the wire spool is configured to rotate about an axis of rotation, and wherein the plurality of selectable angles includes the axis of rotation and the mounting surface forming a 90-degree angle, a 135-degree angle, and a 180-degree angle.

3. The wire-feeder system of claim 1, wherein the wire spool is configured to rotate about an axis of rotation, and wherein the lock comprises a ratchet mechanism to secure an adjustable portion at one of the plurality of selectable angles.

4. The wire-feeder system of claim 1, wherein the multiple-angle hub stand comprises an adjustable portion pivotally coupled to the mounting surface via a hinge.

5. The wire-feeder system of claim 1, wherein the multiple-angle hub stand comprises an adjustable portion pivotally coupled to a fixed portion via a hinge.

6. The wire-feeder system of claim 5, wherein the spool hub is coupled to the adjustable portion and the fixed portion is configured to couple with the mounting surface.

7. The wire-feeder system of claim 5, wherein the lock comprises a lock pin, a first opening formed in the adjustable portion, and a second opening formed in the fixed portion, wherein the lock pin is configured to pass through the first opening and the second opening.

8. The wire-feeder system of claim 7, wherein the first opening is one of a plurality of openings formed in the adjustable portion and arranged radially about the hinge., or;
wherein the second opening is one of a plurality of openings formed in the fixed portion and arranged radially about the hinge, or;
wherein the lock pin is a spring pin.

9. The wire-feeder system of claim 3, wherein the lock comprises a detent positioned on the adjustable portion and a plurality of openings positioned on the fixed portion about the hinge, wherein the detent is configured to engage one of the plurality of openings.

10. The wire-feeder system of claim 1, further comprising a wire guide assembly configured to guide wire from the wire spool supported on the spool hub to a drive roll assembly, and optionally;
wherein the wire guide assembly is coupled to the mounting surface.

11. The wire-feeder system of claim 1, wherein the lock comprises a hinge and a brace arm, or;
wherein the lock comprises a threaded fastener, or;
further comprising a handle coupled to an adjustable portion of the multiple-angle hub stand.

12. A wire-feeder system comprising:
a spool hub configured to support a wire spool; and
a multiple-angle hub stand comprising an adjustable portion pivotally coupled to a fixed portion via a hinge,
wherein the multiple-angle hub stand is configured to support the spool hub and the wire spool relative to a mounting surface of a base platform at one of a plurality of selectable angles; and
a lock configured to secure the adjustable portion relative to the fixed portion at a selected one of the plurality of selectable angles.

13. The wire-feeder system of claim 12, wherein the lock comprises a lock pin configured to engage each of the adjustable portion and the fixed portion.

14. The wire-feeder system of claim 12, wherein the lock comprises a threaded fastener configured to engage one of the adjustable portion and the fixed portion.

15. A method for operating a multiple-angle hub stand of a wire-feeder system in a welding-type system, the method comprising:
mounting a wire spool to a spool hub of the multiple-angle hub stand, wherein the spool hub is position at a first selectable angle selected from a plurality of selectable angles;
adjusting, via the multiple-angle hub stand, the spool hub from the first selectable angle to a second selectable angle selected from the plurality of selectable angles; and
passing a welding wire from the wire spool to a welding torch via a drive roll assembly.
